# EUROPEAN PATENT SPECIFICATION

(11) **EP 3 368 353 B1**
(45) Date of publication and mention of the grant of the patent: **21.04.2021**
(21) Application number: 16794857.9
(22) Date of filing: 28.10.2016
(51) Int. Cl.: B60C 15/04, B60C 9/00

(54) **HYBRID BEAD CORES FOR TIRES**
HYBRIDWULSTKERNE FÜR REIFEN
TRINGLES DE TALON HYBRIDES POUR PNEUMATIQUES

(30) Priority: 28.10.2015 WO PCT/US2015/057752
(43) Date of publication of application: 05.09.2018
(73) Proprietor: Compagnie Générale des Etablissements Michelin, 63000 Clermont-Ferrand (FR)
(72) Inventor: BUCHER, Laurent, Greenville, SC 29605 (US)
(74) Representative: Casalonga
(86) International application number: PCT/US2016/059438
(87) International publication number: WO 2017/075431

(56) References cited:
- WO-A1-2008/061544
- JP-A- H0 796 720
- KR-B1- 100 270 565

## Description

### BACKGROUND OF THE INVENTION

### Field of the Invention

This invention relates generally tires and more particularly to the anchor mechanism for the tire carcass reinforcements.

### Description of the Related Art

JPH0796720 relates to providing a bead core structure, WO2008/061544 relates to a tire comprising a carcass structure, a bead core and a bead filler, KR100270565 relates to a tire with a bead core.

A tire typically includes a carcass reinforcement having one or more carcass plies that provide reinforcement for the tire carcass, a tread band located radially external to the carcass structure and a belt package that is located between, the carcass reinforcement and the tread band. The tire sidewalls are located in axially opposite positions extending from the tread band towards their connected bead sections.

The two bead sections are intended to come into contact with the wheel rim for mounting the tire on a vehicle. The bead section typically includes steel hoops made of wire - the bead core - that anchors the carcass plies or carcass reinforcement, provides the means for locking the tire onto the wheel rim so that it does not slip during rotation and also provides the seal to contain the inflation gas inside the tire. The bead sections may also include the bead filler that surrounds the bead core and other parts that serve to protect the adjacent tire components and hold the bead in place as are well known in the tire field.

Heavy vehicles are those that are intended to carry heavy loads at relatively high speeds, such as heavy trucks used in the freight industry, buses and trucks used in the mining industry and earthmoving equipment. These tires are typically inflated at higher pressures than those that are not heavy vehicles, such as passenger cars. Heavy vehicle tires are often inflated, for example, at a pressure of at least 5 bar or even of at least 9 bar.

It is recognized that providing an improved bead structure can contribute to decreasing the overall weight of the tire that will improve the tire performance without sacrificing the other performance characteristics of the bead. Improvements may further be realized in providing tires that can endure higher pressures before the failure of the bead section without increasing the weight of the bead core.

### SUMMARY OF THE INVENTION

Particular embodiments of the present invention include a tire for a vehicle having two beads intended to come into contact with a wheel rim and a carcass reinforcement anchored by a bead core located in each bead. The carcass reinforcement is wrapped around the bead cores from an innermost side of the bead core to an outermost side of the bead core in order to form a reinforcement turn-up on the outermost side of the bead core. The bead core may include a plurality of separate spirally-wound reinforcements that are placed adjacent to one another in a substantially axial arrangement. The innermost of the spirally-wound reinforcements, that is the one forming the innermost side of the bead core and farthest from the reinforcement turn-up, is formed of a metal wire and there is a nonmetallic wire forming a second reinforcement. In an embodiment, the metal wire has an elongation at break that is at least 40% greater than an elongation at break of the nonmetallic wire.

Alternatively the elongation at break may be at least 100% greater or at least 200% greater than the elongation at break of the nonmetallic wire. Optionally other metals may be useful for forming others of the plurality of spirally-wound reinforcements. It may be noted that one or more of the other spirally-wound reinforcements may be formed of metal wires or nonmetal wires that are the same or different than the wires forming the innermost reinforcement and the second reinforcement.

In particular embodiments a volume ratio of metal wires to nonmetal wires used to form the plurality of spirally-wound reinforcements may be no more than 50% or alternatively less than 20%.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWINGS

FIG. **1** is a diagrammatic cross-sectional view of a bead section of a heavy vehicle tire that is an exemplary embodiment of the invention.
FIG. **2** is a schematic side view of a spirally wound reinforcement as shown in FIG. **1****.**
FIG. **3** is a tensile stress-strain diagram for three different materials suitable for use in forming exemplary spirally-wound reinforcements.

### DETAILED DESCRIPTION OF PARTICULAR EMBODIMENTS

Particular embodiments of the present invention include tires for vehicles having a particular bead core arrangement that will improve the tire's performance and reduce the weight of the tire. Therefore particular embodiments of the present invention include tires having hybrid bead cores, *i.e.,* bead cores that are made of at least two different materials, such as a metal wire and a nonmetallic wire or bead cores made of two different metal wires that may optionally include a nonmetallic wire. It is also recognized that improving the design of the bead core can improve a tire's burst strength and therefore embodiments of the hybrid bead cores disclosed herein provide improved tire burst strength.

By the proper selection and placement of the metal components in particular embodiments of the bead cores disclosed herein, the amount of metal used may be reduced and a greater amount of the nonmetallic bead core material can provide the greatest weight reduction to the tire without sacrificing the other essential performance characteristics of the bead. It is also recognized that the proper selection and placement of the metal components in particular embodiments of the bead cores disclosed herein may provide a higher burst strength of the tire without making the wires more robust and therefore perhaps heavier. A tire's burst strength is the pressure at which a reinforcing structure of the tire breaks and is measured by pumping water into the tire until the weakest link in the reinforcing structure breaks. A bead core failure results in the loss of the seal between the tire bead and the wheel.

More particularly, and as will be further discussed below, a hybrid bead core includes a plurality of separate substantially axially adjacent spirally-wound reinforcements located in the bead section of the tire. Each of the spirally-wound reinforcements is separate because each is formed with its own separate wire. A spirally-wound reinforcement is adjacent to another spirally-wound reinforcement if there is no other tire structure located between them and the two reinforcements are mostly in contact with one another. In particular embodiments the individually spirally-wound wires may be coated with a rubber layer and still remain adjacent to another spirally-wound reinforcement.

A hybrid bead core as used herein includes more than one material that provides the necessary structure to lock the tire onto the wheel and contain the inflation gases of the inflated tire. In particular embodiments the bead core may include at least two different metallic wires and in other embodiments may include at least one metallic wire and at least one nonmetallic wire.

A wire as used herein is a strand or rod of material that may be drawn out or otherwise formed to a desired diameter or width. Such wire may consist of a single strand or rod of desired diameter or width or it may consist of a plurality of strands or fibers that are bound or held together to form the wire.

The ultimate tensile strength or tensile strength as used herein is the highest point on a tensile stress-strain diagram and is therefore the maximum amount of tensile stress that a material can withstand before breaking. It is typically expressed in pascals (Pa).

The elongation at break or strain at break as used herein is the ratio between the changed length and the initial length after breakage of a test specimen. The percent elongation at break is that ratio multiplied by 100 and expressed as a percent.

The tensile modulus as used herein is the ratio of stress to strain and is the slope of the linear portion of a stress-strain diagram and is also known as Young's Modulus. The tensile modulus is typically expressed in Pa.

The tensile strength, elongation at break and tensile modulus for steel wires are determined based on ASTM E8/8M Standard Test Methods for Tension Testing of Metallic Materials and based on ASTM D3039 Tensile Properties of Polymer Matrix Composite Materials. Namely a universal testing machine and an extensometer are used in the testing method. As is known, the extensometer is an instrument for determining the distance between two designated points located within the gage length of the test specimen as the specimen is stretched. The test specimen is mounted in the grips of the testing machine taking care to align the long axis of the specimen with that of the grips of the machine. The extensometer is attached and the testing machine started with a nominal cross-head speed of 0.20 in/min. Loads and corresponding extensions are recorded at uniform intervals of extension or load until the specimen breaks, which occurs at the breaking load.

The tensile strength is calculated by dividing the maximum load by the original minimum cross-sectional area of the specimen. The modulus of elasticity is calculated by extending the initial linear portion of the load-extension curve and dividing the difference in stress, corresponding to a segment of this line, by the corresponding difference in strain, *i.e.,* the slope of the line. This calculation is performed using the average initial cross-sectional area within the gage length of the specimen. The percent elongation at break is calculated by dividing the extension at rupture of the specimen by the original gage length and multiplying by 100.

The hybrid bead cores disclosed herein are useful for heavy vehicle tires and particular embodiments of the disclosed bead cores may be limited to heavy vehicles applications, especially for trucks used in the trucking industry for transporting freight and/or for buses. However other embodiments of the hybrid bead cores may include their use in passenger and light truck tires as well as other types of tires, including agriculture tires. As is well known in the art, larger tires that are inflated at higher pressures must have bead cores that are more robust than the bead cores of smaller tires that are inflated at lower pressure. Heavy vehicle truck tires and bus tires are typically inflated, for example, at between 5 bar and 9 bar while passenger tires and light trucks are inflated, for example, at between 1.5 bar and 4.5 bar.

While the discussions that follow are often directed to a heavy vehicle tire such as those useful in the freight hauling industry, such descriptions are as examples only and are not meant on their own to limit the invention to such tires.

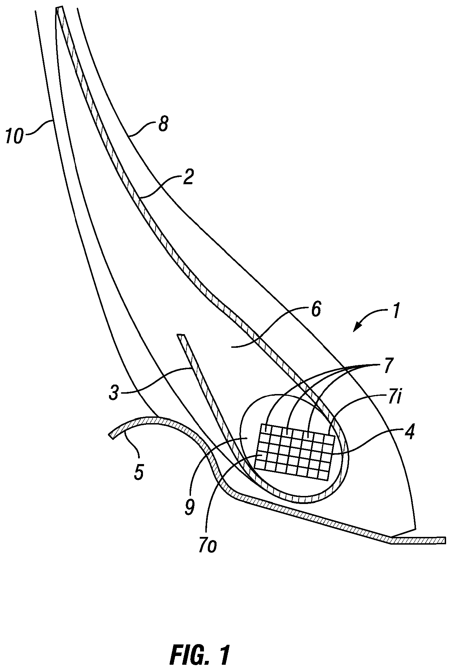

FIG. **1** is a diagrammatic cross-sectional view of a bead section of a heavy vehicle tire that is an exemplary embodiment of the invention. This figure illustrates the interaction between the bead section **1** and the wheel rim flange **5** and also shows one means for anchoring the carcass reinforcement **2** with the bead core **4** by wrapping the carcass reinforcement **2** around the bead core **4** to form a carcass reinforcement turn-up **3** on the exterior side of the tire, *i.e.,* the side having the sidewalls **10.**

The bead core **4** has an outermost side and an innermost side. The outermost side of the bead core **4** is the side having the turn-up **3** and the innermost side of the bead core **4** is the opposite side thereto. As shown in FIG. **1****,** the turn-up **3** is located on the outermost side of the bead core **4** that is formed with the outermost reinforcement **7o.** Alternatively, if the carcass reinforcement **2** had been wound around the bead core **4** from the outer side of the tire towards the inner side of the tire so that the turn-up **4** was formed on the interior side of the tire, *i.e.,* the side having the interior surface **8,** then the outermost and innermost sides of the bead core would be reversed from those shown in FIG. **1** since the outermost side of the bead core would now be the side closest to the interior surface **8** of the tire, *i.e.,* the side having the turn-up **4.**

The apex **6** or bead filler provides additional protection to the bead core **4** as does the annular insert **9** that may be useful in certain embodiments. The sidewalls **10** extend between the bead section **1** and the tread band (not shown) and the interior surface **8** of the tire is typically formed as a barrier layer having characteristics that inhibit the migration of the inflation gas through the tire.

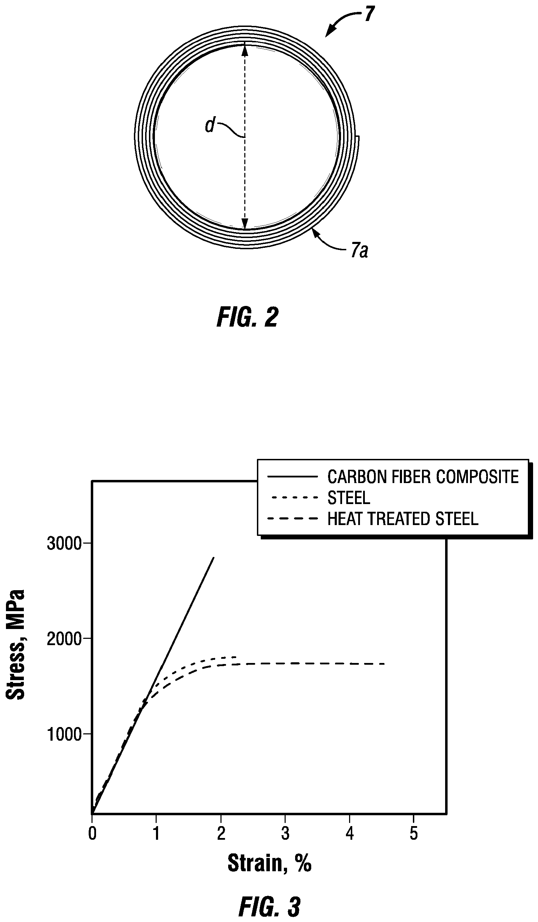

FIG. **2** is a schematic side view of a spirally-wound reinforcement in accordance with an embodiment of the present invention. The bead core **4** itself is formed of a plurality of separate substantially axially adjacent spirally-wound reinforcements **7.** A reinforcement **7** is formed of a wire (that in some embodiments may include a cord obtained by stranding at least one pair of wires) that is spirally wound around a mold having the diameter of the desired bead core inner diameter d. For the reinforcement **7** shown in the FIG. **2****,** the wire has been wound five times around the mold to form a reinforcement having five stacked layers.

As shown in FIG. **1****,** the exemplary bead core **4** includes seven spirally-wound reinforcements **7,** each wound to form five layers, each placed axially adjacent one to the other and each formed of wire measuring 2 mm x 1.3 mm. This construction of a bead core may be expressed as a C x F construction, where C is the number of layers (number of spiral wraps for each wire) and F is the number of adjacent reinforcements or wires. For example a 5 x 7 configuration would indicate that there are seven spirally-wound reinforcements having five layers, in this case forming a quadrilinear shaped core as shown in FIG. **1****.** Examples of other configurations having wires of different or the same dimensions may include 5 x 8, 5x7, 6x9, 5 x 6, 7 x 9 and 6 x 8.

Since each of the reinforcements **7** are axially adjacent to one another, the reinforcements shown in FIG. **1** as an exemplary embodiment are arranged in ascending distance from the interior of the tire with the innermost reinforcement **7i** being closest to the interior of the tire in this example and the outermost reinforcement **7o** being furthest from the interior of the tire in this example and closest to the wheel flange **5.**

The wires useful for forming the spirally-wound reinforcements may be of any size and shape that is suitable for the application. For example the wires may be oval, circular, hexagonal or other polygonal shape, rectangular or square.

The wires that make up the individual spirally-wound reinforcements may be, for example, between 0.7 mm and 5 mm wide with a height of between 0.5 mm and 2 mm. Heights and widths are both measured at their maximum if not constant. If circular, the diameter (width) of the wire may be between 0.7 mm and 5 mm. Alternatively the width or diameter may between 1 mm and 3 mm, between 1.5 mm and 2.5 mm or between 2 mm and 3 mm. Alternatively the height may be between about 1 mm and 1.5 mm. In some embodiments of the disclosed bead core the individual wires may be coated with a thin layer of rubber as is known in the art before being spirally wound. Alternatively the individual spirally-wound reinforcements may be placed adjacent to one another without first being coated with rubber.

The geometry of the wires that make up the spirally-wound reinforcements may be the same or different. In particular embodiments each of the spirally-wound reinforcement may be made of wires having the same geometry. For example each of the individual spirally-wound reinforcements may be made of wires that are 2 mm x 1.3 mm rectangular shape.

Embodiments of the hybrid bead cores disclosed herein include a particular arrangement of the spirally-wound reinforcements since it has been determined that the individual spirally-wound reinforcements are stressed more or less in order beginning with the innermost reinforcement and progressing to the outermost reinforcement.

Using finite element analysis on a software system such as ABAQUS, the loading of the bead was analyzed after inflation of the tire. The analysis of a bead core arrangement similar to the one shown in FIG. **1** demonstrated that the loading of the bead core is heterogeneous; *i.e.,* the wire columns that form or are close to the innermost side of the bead core (closest to the inside of the tire in the exemplary embodiment of FIG. **1**) are more loaded than the wire columns farther from the innermost side of the bead core.

The results of a finite element analysis simulating a seven wire / 5 layer bead core (a 5 x 7 construction) when the tire is inflated are shown in Table **1.**

**Table 1 -Loading of Bead Core, daN**

| | C1 | C2 | C3 | C4 | C5 | C6 | C7 |
|---|---|---|---|---|---|---|---|
| F1 | 135 | 100 | 90 | 85 | 75 | 75 | 75 |
| F2 | 135 | 100 | 90 | 85 | 75 | 75 | 75 |
| F3 | 135 | 100 | 90 | 77 | 75 | 75 | 75 |
| F4 | 135 | 100 | 87 | 77 | 75 | 75 | 75 |
| F5 | 135 | 100 | 85 | 75 | 75 | 75 | 75 |

Each of the wires C1-C7 has five layers F1-F5 (spirally-wrapped five times). C1 represents the spirally-wound reinforcement that forms the innermost side of the bead core and C7 represents the spirally-wound reinforcement that is farthest from the innermost side of the bead core and therefore forming the outermost side of the bead core. Each of the wires are made of the same carbon steel and have a cross section of 2 mm by 1.3 mm.

As Table **1** demonstrates, the highest loading occurs on the wire C1 that forms the innermost side of the bead core and the lowest loadings are on the outer wires, including C7, which forms the outermost side of the bead core. Therefore one of the objects of the bead cores disclosed herein is to design the bead core with the innermost wire having a higher elongation at break than the other wires.

It is realized that as a tire is inflated, the first innermost wire loads first and then the second wire starts to load and so forth with the other wires. As the first wire is loaded, it continues to elongate without breaking while the second wire is loaded. If the inner wire does not have sufficient elongation at break property to allow it to elongate while the second wire takes on additional load, then the wire will break causing the bead core to fail unless the inner wire was made more robust, *i.e.,* thicker or otherwise having a higher tensile strength. The higher elongation at break of the wire forming the innermost reinforcement provides a tire having a bead core that can withstand a higher burst pressure during the tire's inflation without first making the wire more robust with a higher tensile strength.

FIG. **3** is a tensile stress-strain diagram for three different materials: a carbon fiber composite wire, a steel wire, and a heat treated steel wire. This diagram shows that the carbon fiber composite wire has the highest tensile strength between the three materials, with the tensile breaking stress being about 3000 MPa. However it also has the lowest strain at break, which is less than 2%.

The steel wire (about 0.7% carbon) is of intermediate tensile strength when compared to the others, having a breaking tensile stress of about 1700 MPa and a strain at break of about 2%. The same steel wire that has been heat treated, in a manner as is known in the art, to provide a wire that has slightly decreased tensile strength as a result of the heat treatment but has by far the highest strain at break of about 4.5%.

The steel wires are made by drawing the starting metal stock through a series of dies, each die reducing the cross section of the wire until the desired cross section is obtained. This process is a cold working process and is typically performed at room temperature. As is known in the art, the mechanical properties of the wire change as it is drawn through each die with significant increases in the wire's tensile strength occurring as a result of the cold working process. For example, starting with a steel bar of about 5.5 mm and drawing it through a series of dies, the steel can be reduced to a width of about 1.8 mm to develop sufficient tensile strength. If the desire is to increase the resulting wire's elongation at break property, the wire may be heat treated, for example at between 400° C and 500° C, in known ways to significantly improve its elongation property with a loss of no more than about 20% or no more than about 10% of its tensile strength.

Particular embodiments of the bead cores disclosed herein include spirally-wound reinforcements formed from wires having higher elongation at break than other wires within the bead core. Such wires may, for example, have an elongation at break of between 2% and 7% or alternatively between 3% and 6% or between 4% and 6%. While further heat treatment of steel wires can increase the elongation at break to even higher levels, those skilled in the art will realize that the tensile strength also decreases, thereby perhaps making the steel lacking the requisite tensile strength to be used in a bead core.

Particular embodiments of the bead cores disclosed herein include a spirally-wound reinforcement formed of a first metal wire and a second spirally wound reinforcement that is formed of a second metal wire with nonmetal wires optionally forming additional reinforcements. For example such embodiments may include the first metal wire forming the innermost of the spirally-wound reinforcements that are formed of metal wires and a second metal wire forming at least one other of the plurality of spirally-wound reinforcements. The innermost location of the bead core is that location that is farthest from the reinforcement turn-up, the reinforcement turn-up being on the outermost side of the bead core.

In such embodiments, since the first metal wire will be the first to be stressed during the inflation of the tire, the first meal wire may be characterized as having an elongation at break that is at least 40% greater than the elongation at break of the second wire. Such an arrangement may provide a tire having a higher burst pressure without increasing the diameter or strength of the wires that would likely result in a heavier construction.

Alternatively the elongation at break of the first metal wire may be at least 50%, at least 75%, at least 100%, at least 125%, or at least 175% greater than the elongation at break of the second metal wire. In particular embodiments the elongation at break may be as much as 200% or 300% greater than the elongation at break of the second wire, which may provide ranges when coupled with any of the lower limits provided above. For example the first metal wire may have an elongation at break that is between 75% and 200% or alternatively between 125% and 200% greater than the elongation at break of the second metal wire.

As an example, the steel wire shown on the tensile stress-strain diagram of FIG. 3 has an elongation at break of about 2.1 % while the heat treated steel wire has an elongation at break of about 4.5% or an elongation at break that is 114% greater than that of the steel wire.

In those embodiments of the disclosed hybrid bead cores having more than two different metallic wire materials used to form the plurality of spirally-wound reinforcements, the metallic wire forming the innermost of all the spirally-wound reinforcements formed of metal wires may be characterized as having an elongation at break that is greater by the above mentioned percentages and ranges than the metallic wire having the lowest elongation at break of all the other metallic wires in the bead core.

In particular embodiments, the metallic wire is a carbon steel wire which, in some embodiments, may include being an alloy thereof. While most carbon steel may have a carbon content of between 0.12 wt% and 2 wt%, suitable steel wire for embodiments of the disclosed hybrid bead core may be made, for example, of medium carbon steel having a carbon content of between 0.3 wt% and 0.8 wt%. Typically the higher the carbon content is in the steel then the higher the hardness and strength properties are of the steel. In particular embodiments the metallic wire is made of a single filament and in other embodiments the wire is not made of a plurality of filaments that are stranded or otherwise held together.

In addition to the different metallic wires, particular embodiments of the hybrid bead core may optionally include nonmetallic wires forming at least one of the remaining spirally-wound reinforcements.

Nonmetallic wires may include, for example, those made from materials including fiberglass, aramid and carbon fibers, all well-known in the art. In particular embodiments of the bead cores disclosed herein, the nonmetallic wires may be made of carbon fiber composites that are generally manufactured by dipping the carbon fibers into a thermosetting resin. Suitable carbon fibers are manufactured by Toho Tenax of JP and Toray Industries of Japan. For example Toray produces a carbon fiber T300 that when combined with an epoxy resin based material at 60% carbon fiber volume provides a carbon fiber composite having a tensile strength of 1.86 GPa and an elongation at break of 1.3%. Toray T400H is carbon fiber product that when combined with an epoxy resin based material at 60% carbon fiber volume provides a carbon fiber composite having a tensile strength of 2.25 GPa and an elongation at break of 1.5%. Toho produces a carbon fiber product IMS65 having a tensile strength of 6.0 GPa and an elongation at break of 1.9% that can also be combined with epoxy resin to provide a suitable carbon fiber composite. In fact such fiber when combined with an epoxy resin based material at 60% carbon fiber volume produces a carbon fiber composite similar to the one shown in FIG. **3****.**

The process for forming the composite from the carbon fibers is well known in the art and typically includes dipping the fibers in a bath that includes the epoxy resin to impregnate the fibers with the coating and then drying the coating to form the carbon fiber composite. In particular embodiments, the fibers may be twisted either before dipping them in the bath or after dipping but before the resin is dry.

Typically carbon fiber composites are known to be very strong with high tensile strength but with a fairly low elongation at break as noted above. They are desirable for use in a tire bead core because of their low weight but since they are so expensive their use must be justified for the results they provide. That is why a hybrid bead core of metal and carbon fiber composite wires can be a preferred construction, especially when the loading of the individual spirally-wound reinforcements is understood by the tire designer, *i.e.,* the highest stress is upon the innermost reinforcement member.

The optionally included nonmetallic wire useful for forming at least one of the plurality of axially adjacent spirally-wound reinforcements may be located at the innermost position of all the spirally-wound reinforcements or at the outermost position or anywhere between the innermost and outermost positions. In particular embodiments the nonmetallic wire is not located in the innermost position.

Other embodiments of the hybrid bead cores disclosed herein include both a required nonmetallic wire and a metallic wire for forming the plurality of separate substantially axially adjacent spirally-would reinforcements. In these embodiments, a metal wire forms the innermost of the plurality of spirally-wound reinforcements and nonmetallic wires form other of the spirally-wound reinforcements. The innermost reinforcement is the one closest to the interior of the tire. In these embodiments, the innermost spirally-wound reinforcement is made of a metal wire that has an elongation at break at least 40% greater than an elongation at break of the nonmetallic wire having the lowest elongation at break of all the wires making up the bead core.

Alternatively the elongation of break of the metal wire may be at least 50%, at least 75%, at least 100%, at least 125%, or at least 175% greater than the elongation at break of said nonmetallic wire. In particular embodiments the elongation at break may be as much as 200%, 300% or 400% greater than the elongation at break of said nonmetallic wire, which may provide ranges when coupled with any of the lower limits provided above. For example the metal wire may have an elongation at break that is between 75% and 200% or alternatively between 125% and 175% greater than the elongation at break of the nonmetallic wire having the lowest elongation at break of all the wires making up the bead core.

As an example, the carbon fiber composite wire shown on the stress-strain diagram of FIG. 3 has an elongation of break at about 2 % while the heat treated steel wire has an elongation at break of about 4.5% or an elongation at break that is 125% greater than that of the carbon fiber composite wire.

This particular arrangement of the spirally-wound reinforcements provides for a reduction in the total amount of nonmetallic wires while still providing a lighter weight bead core at a reduced cost. It can be designed in this manner as a result of understanding that the highest stress is on the innermost reinforcement. By allowing the innermost reinforcement to grow with its increased elongation at break property, the tire can have an improved burst pressure without the expense of the higher cost nonmetallic wire or otherwise more robust wire.

Particular embodiments of the present invention may also limit the volume of metal that may be included in the bead core. Because the innermost spirally-wound reinforcement must endure the greatest load with each of the more outer reinforcements having progressively less load moving away from the interior of the tire, particular embodiments of the bead cores described herein provide that the volume ratio of the metal to the nonmetallic wires be less than 20%. Thus, for example, in a bead construction that includes 8 wires total, all having the same dimensions, with the innermost wire being metal and the remaining being nonmetal, then the ratio would be 1/7 or about 14%.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention. The foregoing description is provided for the purpose of illustration only. Only the language of the following claims should limit the scope of this invention.

## Claims

1. A tire for a vehicle, comprising:
two beads (1) intended to come into contact with a wheel rim (5), a bead core (4) positioned in each of the beads (1), a carcass reinforcement (2) wrapped around the bead cores (4) from an innermost side of the bead core (4) to an outermost side of the bead core (4) in order to form a reinforcement turn-up (3) on the outermost side of the bead core (4), the bead core (4) comprising a plurality of separate substantially axially adjacent spirally-wound reinforcements (7);
a metal wire positioned as an innermost of the plurality of spirally-wound reinforcements (7) to form the innermost side (C1) of the bead core (4); and
a nonmetallic wire forming a second reinforcement of the plurality of spirally-wound reinforcements (7), wherein the metal wire has an elongation at break at least 40% greater than an elongation at break of the nonmetallic wire.

2. The tire of claim 1, wherein the nonmetallic wire has a lowest elongation at break of any wires forming one or more of the plurality of spirally-wound reinforcements (7).

3. The tire of claim 1 or 2, wherein the nonmetallic wire is a carbon fiber composite wire.

4. The tire of any of the preceding claims, wherein the metal wire forming the innermost of the plurality of spirally-wound reinforcement (7) has an elongation at break at least 100% greater than an elongation at break of the nonmetallic wire.

5. The tire of any of the preceding claims, wherein the metal wire forming the innermost of the plurality of spirally-wound reinforcement (7) has an elongation at break at least 200% greater than an elongation at break of the nonmetallic wire.

6. The tire of any of the preceding claims, wherein one or more of the plurality of spirally-wound reinforcements (7) are formed of nonmetallic wires selected from materials that are the same as the nonmetallic wire forming the second reinforcement or different.

7. The tire of any of the preceding claims, wherein one or more of the plurality of spirally-wound reinforcements (7) are formed of metallic wires selected from materials that are the same as the metallic wire forming the innermost spirally-wound reinforcement or different.

8. The tire of any of the preceding claims, wherein the metallic wire forming the innermost spirally-wound reinforcement (7) and the nonmetallic wire forming the second reinforcement are single filament wires.

9. The tire of any of the preceding claims, wherein a volume ratio of metal wires to nonmetal wires used to form the plurality of spirally-wound reinforcements (7) is no more than 50%.

10. The tire of claim 9, wherein the ratio is less than 20%.

11. The tire of any of the preceding claims, wherein the nonmetallic wire forms all of the plurality of spirally-wound reinforcements (7) except the innermost spirally-wound reinforcement (7).

12. The tire of any of the preceding claims, wherein dimensions of the wires forming the plurality of spirally-wound reinforcements (7) are identical.

13. The tire of any of the preceding claims, wherein the plurality of spirally-wound reinforcements (7) are formed with wires that are between 0.7 mm and 5 mm wide.

14. The tire of any of the preceding claims, wherein the plurality of spirally-wound reinforcements (7) are formed of wires between 2 mm and 3 mm wide.

15. The tire of any of the preceding claims, wherein the tire is for a heavy vehicle tire.

16. A tire for a vehicle, comprising:
two beads (1) intended to come into contact with a wheel rim (5), a bead core (4) positioned in each of the beads (1), a carcass reinforcement (2) wrapped around the bead cores (4) from an innermost side of the bead core (4) to an outermost side of the bead core (4) in order to form a reinforcement turn-up (3) on the outermost side of the bead core (4), the bead core (4) comprising a plurality of separate substantially axially adjacent spirally-wound reinforcements (7);
a first metal wire positioned as an innermost of the plurality of spirally-wound reinforcements (7) that are formed of metal wires, to form the innermost side of the bead core (4);
a second metal wire forming a second reinforcement of the plurality of spirally-wound reinforcements (7), wherein the first metal wire has an elongation at break at least 40% greater than an elongation at break of the second metal wire.

## Patentansprüche

1. Reifen für ein Fahrzeug, umfassend:
zwei Wülste (1), die dazu bestimmt sind, mit einer Radfelge (5) in Kontakt zu kommen, einen Wulstkern (4), der in jedem der Wülste (1) angeordnet ist, eine Karkassenverstärkung (2), die um die Wulstkerne (4) von einer innersten Seite des Wulstkerns (4) zu einer äußersten Seite des Wulstkerns (4) gewickelt ist, um einen Verstärkungsumschlag (3) auf der äußersten Seite des Wulstkerns (4) zu bilden, wobei der Wulstkern (4) eine Vielzahl von separaten, im Wesentlichen axial benachbarten, spiralförmig gewickelten Verstärkungen (7) umfasst;
einen Metalldraht, der als innerster der Vielzahl von spiralförmig gewickelten Verstärkungen (7) positioniert ist, um die innerste Seite (Cl) des Wulstkerns (4) zu bilden; und
einen nichtmetallischen Draht, der eine zweite Verstärkung der Vielzahl von spiralförmig gewickelten Verstärkungen (7) bildet, wobei der Metalldraht eine Bruchdehnung aufweist, die mindestens um 40 % größer ist als eine Bruchdehnung des nichtmetallischen Drahtes.

2. Reifen nach Anspruch 1, wobei der nichtmetallische Draht die niedrigste Bruchdehnung aller Drähte aufweist, die eine oder mehrere der Vielzahl von spiralförmig gewickelten Verstärkungen (7) bilden.

3. Reifen nach Anspruch 1 oder 2, wobei der nichtmetallische Draht ein Kohlenstofffaser-Verbunddraht ist.

4. Reifen nach einem der vorhergehenden Ansprüche, wobei der Metalldraht, der die innerste der Vielzahl von spiralförmig gewickelten Verstärkungen (7) bildet, eine Bruchdehnung aufweist, die mindestens 100 % größer ist als die Bruchdehnung des nichtmetallischen Drahtes.

5. Reifen nach einem der vorhergehenden Ansprüche, wobei der Metalldraht, der die innerste der Vielzahl von spiralförmig gewickelten Verstärkungen (7) bildet, eine Bruchdehnung aufweist, die mindestens 200 % größer ist als die Bruchdehnung des nichtmetallischen Drahtes.

6. Reifen nach einem der vorhergehenden Ansprüche, wobei eine oder mehrere aus der Vielzahl von spiralförmig gewickelten Verstärkungen (7) aus nichtmetallischen Drähten gebildet sind, die aus Materialien ausgewählt sind, die die gleichen sind, wie der nichtmetallische Draht, der die zweite Verstärkung bildet, oder unterschiedlich sind.

7. Reifen nach einem der vorhergehenden Ansprüche, wobei eine oder mehrere aus der Vielzahl von spiralförmig gewickelten Verstärkungen (7) aus Metalldrähten gebildet sind, die aus Materialien ausgewählt sind, die die gleichen sind wie der Metalldraht, der die innerste spiralförmig gewickelte Verstärkung bildet, oder unterschiedlich sind.

8. Reifen nach einem der vorhergehenden Ansprüche, wobei der Metalldraht, der die innerste spiralförmig gewickelte Verstärkung (7) bildet, und der nichtmetallische Draht, der die zweite Verstärkung bildet, Einzeldrähte sind.

9. Reifen nach einem der vorhergehenden Ansprüche, wobei das Volumenverhältnis von Metalldrähten zu Nichtmetalldrähten, die zur Bildung der Vielzahl von spiralförmig gewickelten Verstärkungen (7) verwendet werden, nicht mehr als 50 % beträgt.

10. Reifen nach Anspruch 9, wobei das Verhältnis weniger als 20 % beträgt.

11. Reifen nach einem der vorhergehenden Ansprüche, wobei der nichtmetallische Draht alle aus der Vielzahl der spiralförmig gewickelten Verstärkungen (7) mit Ausnahme der innersten spiralförmig gewickelten Verstärkung (7) bildet.

12. Reifen nach einem der vorhergehenden Ansprüche, wobei die Abmessungen der Metalldrähte, die die Vielzahl von spiralförmig gewickelten Verstärkungen (7) bilden, identisch sind.

13. Reifen nach einem der vorhergehenden Ansprüche, wobei die Vielzahl der spiralförmig gewickelten Verstärkungen (7) mit Drähten gebildet ist, die zwischen 0,7 mm und 5 mm breit sind.

14. Reifen nach einem der vorhergehenden Ansprüche, wobei die Vielzahl der spiralförmig gewickelten Verstärkungen (7) aus Drähten mit einer Breite zwischen 2 mm und 3 mm gebildet ist.

15. Reifen nach einem der vorhergehenden Ansprüche, wobei der Reifen für einen schweren Fahrzeugreifen bestimmt ist.

16. Reifen für ein Fahrzeug, umfassend:
zwei Wülste (1), die dazu bestimmt sind, mit einer Radfelge (5) in Kontakt zu kommen, einen Wulstkern (4), der in jedem der Wülste (1) angeordnet ist, eine Karkassenverstärkung (2), die um die Wulstkerne (4) von einer innersten Seite des Wulstkerns (4) zu einer äußersten Seite des Wulstkerns (4) gewickelt ist, um einen Verstärkungsumschlag (3) auf der äußersten Seite des Wulstkerns (4) zu bilden, wobei der Wulstkern (4) eine Vielzahl von separaten, im Wesentlichen axial benachbarten, spiralförmig gewickelten Verstärkungen (7) umfasst;
einen ersten Metalldraht, der als eine innerster aus der Vielzahl von spiralförmig gewickelten Verstärkungen (7) positioniert ist, die aus Metalldrähten gebildet sind, um die innerste Seite des Wulstkerns (4) zu bilden;
einen zweiten Metalldraht, der eine zweite Verstärkung aus der Vielzahl der spiralförmig gewickelten Verstärkungen (7) bildet, wobei der erste Metalldraht eine Bruchdehnung aufweist, die mindestens 40 % größer ist als eine Bruchdehnung des zweiten Metalldrahtes.

## Revendications

1. Pneumatique pour un véhicule, comprenant :
deux talons (1) destinés à venir en contact avec une jante de roue (5), une tringle de talon (4) positionnée dans chacun des talons (1), un renfort de carcasse (2) enroulé autour des tringles de talon (4) d'un côté le plus à l'intérieur de la tringle de talon (4) à un côté le plus à l'extérieur de la tringle de talon (4) afin de former un recouvrement de renfort (3) sur le côté le plus à l'extérieur de la tringle de talon (4), la tringle de talon (4) comprenant une pluralité de renforts (7) séparés enroulés en spirale sensiblement adjacents axialement ;
un fil métallique positionné comme un le plus à l'intérieur de la pluralité de renforts enroulés en spirale (7) pour former le côté le plus à l'intérieur (C1) de la tringle de talon (4) ; et
un fil non métallique formant un second renfort de la pluralité de renforts enroulés en spirale (7), dans lequel le fil métallique présente un allongement à la rupture supérieur d'au moins 40 % à un allongement à la rupture du fil non métallique.

2. Pneumatique selon la revendication 1, dans lequel le fil non métallique présente un allongement à la rupture le plus bas de tout fil formant un ou plusieurs de la pluralité de renforts enroulés en spirale (7).

3. Pneumatique selon la revendication 1 ou 2, dans lequel le fil non métallique est un fil composite de fibre de carbone.

4. Pneumatique selon l'une quelconque des revendications précédentes, dans lequel le fil métallique formant le plus à l'intérieur de la pluralité de renforts enroulés en spirale (7) présente un allongement à la rupture supérieur d'au moins 100 % à un allongement à la rupture du fil non métallique.

5. Pneumatique selon l'une quelconque des revendications précédentes, dans lequel le fil métallique formant le plus à l'intérieur de la pluralité de renforts enroulés en spirale (7) présente un allongement à la rupture supérieur d'au moins 200 % à un allongement à la rupture du fil non métallique.

6. Pneumatique selon l'une quelconque des revendications précédentes, dans lequel un ou plusieurs de la pluralité de renforts enroulés en spirale (7) sont formés de fils non métalliques sélectionnés à partir de matériaux qui sont les mêmes que le fil non métallique formant le second renfort ou différents.

7. Pneumatique selon l'une quelconque des revendications précédentes, dans lequel un ou plusieurs de la pluralité de renforts enroulés en spirale (7) sont formés de fils métalliques sélectionnés à partir de matériaux qui sont les mêmes que le fil métallique formant le renfort enroulé en spirale le plus à l'intérieur ou sont différents.

8. Pneumatique selon l'une quelconque des revendications précédentes, dans lequel le fil métallique formant le renfort enroulé en spirale le plus à l'intérieur (7) et le fil non métallique formant le second renfort sont des fils à filament unique.

9. Pneumatique selon l'une quelconque des revendications précédentes, dans lequel un rapport de volume entre les fils métalliques et les fils non métalliques utilisés pour former la pluralité de renforts enroulés en spirale (7) n'est pas supérieur à 50 %.

10. Pneumatique selon la revendication 9, dans lequel le rapport est inférieur à 20 %.

11. Pneumatique selon l'une quelconque des revendications précédentes, dans lequel le fil non métallique forme toute la pluralité de renforts enroulés en spirale (7) à l'exception du renfort enroulé en spirale le plus à l'intérieur (7).

12. Pneumatique selon l'une quelconque des revendications précédentes, dans lequel des dimensions des fils formant la pluralité de renforts enroulés en spirale (7) sont identiques.

13. Pneumatique selon l'une quelconque des revendications précédentes, dans lequel la pluralité de renforts enroulés en spirale (7) sont formés de fils qui présentent une largeur entre 0,7 mm et 5 mm.

14. Pneumatique selon l'une quelconque des revendications précédentes, dans lequel la pluralité de renforts enroulés en spirale (7) sont formés de fils présentant une largeur entre 2 mm et 3 mm.

15. Pneumatique selon l'une quelconque des revendications précédentes, dans lequel le pneumatique est destiné à un pneumatique de véhicule lourd.

16. Pneumatique pour un véhicule comprenant :
deux talons (1) destinés à venir en contact avec une jante de roue (5), une tringle de talon (4) positionnée dans chacun des talons (1), un renfort de carcasse (2) enroulé autour des tringles de talon (4) depuis un côté le plus à l'intérieur de la tringle de talon (4) à un côté le plus à l'extérieur de la tringle de talon (4) afin de former un recouvrement de renfort (3) sur le côté le plus à l'extérieur de la tringle de talon (4), la tringle de talon (4) comprenant une pluralité de renforts séparés enroulés en spirale sensiblement adjacents axialement (7) ;
un premier fil métallique positionné comme un le plus à l'intérieur de la pluralité de renforts enroulés en spirale (7) qui sont formés de fils métalliques, pour former le côté le plus à l'intérieur de la tringle de talon (4) ;
un second fil métallique formant un second renfort de la pluralité de renforts enroulés en spirale (7), dans lequel le premier fil métallique présente un allongement à la rupture supérieur d'au moins 40 % à un allongement à la rupture du second fil métallique.
